Europäisches Patentamt

European Patent Office

Office européen des brevets

(11) Publication number: **0 273 627 B1**

# EUROPEAN PATENT SPECIFICATION

(45) Date of publication of patent specification: **22.06.94**  (51) Int. Cl.⁵: **C08F  10/08**, C08F 2/00

(21) Application number: **87310949.0**

(22) Date of filing: **11.12.87**

(54) **Fixed bed process for polymerizing liquid butenes.**

(30) Priority: **12.12.86 US 941288**
**04.09.87 US 93804**

(43) Date of publication of application:
**06.07.88 Bulletin  88/27**

(45) Publication of the grant of the patent:
**22.06.94 Bulletin  94/25**

(84) Designated Contracting States:
**BE DE FR GB IT**

(56) References cited:
**EP-A- 0 101 205**
**GB-A- 2 001 662**
**US-A- 2 698 320**
**US-A- 3 109 041**

(73) Proprietor: **EXXON CHEMICAL PATENTS INC.**
**1900 East Linden Avenue**
**Linden, New Jersey 07036-0710(US)**

(72) Inventor: **Chen, Frank Joung-yei**
**28 Ellison Avenue**
**Edison New Jersey(US)**
Inventor: **Lundberg, Robert Dean**
**4 Brian Drive**
**Bridgewater New Jersey(US)**

(74) Representative: **Northover, Robert Frank et al**
**Exxon Chemical Limited**
**Exxon Chemical Technology Centre**
**PO Box 1**
**Abingdon Oxfordshire, OX13 6BB (GB)**

**Description**

This invention concerns a process in which various butene liquid feeds containing at least isobutene are passed through a fixed bed of granular aluminum trichloride catalyst, preferably in the presence of an added co-catalyst, to produce a polymerized butene product having number-average molecular weight ($\overline{M}_n$) of greater than about 250.

BACKGROUND OF THE INVENTION

The polymerization of various butenes, whether mixtures containing 1-butene, 2-butene and isobutene or only one or two of these isomers, using aluminum halide catalysts is known. Aluminum trichloride polymerization catalysts, often in conjunction with co-catalysts (or promoters) such as hydrogen chloride, alcohols or water, have been used to produce polybutenes. These catalysts typically are introduced into the reactor feed at a temperature, pressure and in such a fashion (e.g., as a suspended particle) that the catalysts stay highly dispersed until the polymerization reaction is considered to be complete. Quite obviously, the polymeric product is more viscous than is the monomer feed. Consequently, termination of the polymerization reaction at a desired conversion or product molecular weight and removal of the dispersed catalyst from the viscous polymeric solution can be difficult.

Patents which are representative of these processes include US-A-2 698 320 and 2 779 753. These show the polymerization of isobutylene using solid particulate aluminum trichloride.

GB-A-2 001 662 relates to a method for producing polybutenes by passing the liquid monomer feed through a fixed bed of catalyst material comprising a Lewis Acid chloride (e.g., $AlCl_3$) catalyst intercalated within graphite. The catalyst is prevented from being fluidized during passage of the feed therethrough by packing the catalyst between layers of pecking material which fill the remaining portions of the reactor. The feed moisture level is reduced to less thin 20 ppm water, and HCl is optionally added to the gas feed as a co-catalyst.

US-A-4 400 493 relates to the polymerization of isobutylene in which the exothermic heat of reaction is removed by vaporizing unreacted hydrocarbons to maintain a constant controlled reaction temperature and pressure. Finely divided particles of aluminum trichloride are illustrated in a catalyst slurry. The patentee also suggests that the polymerization process can also be employed in a fixed catalyst bed, although no detailed teachings are contained thereto. The patent indicates that recycle rate within the reactor of about 10 times the fresh feed rate is important to the illustrated process.

US-A-2 698 320 describes the polymerisation of substantially pure isobutylene by means of finely divided solid aluminium chloride, i.e. having a particle size of less than 0.2 mm (60 mesh). The reaction is carried out in a stirred suspension.

US-A-3 109 041 describes the polymerisation of olefins (e.g. butenes) in a two stage process utilising a Friedel-Crafts catalyst in a dissolved or suspended form. It is preferred to use dissolved boron trifluoride. In the first stage, the reaction is carried out in a conventional reactor, i.e. with the monomer and dissolved or suspended catalyst in an agitated liquid form. The catalyst is transferred with the effluent to the second stage reactor which comprises a fixed bed catalyst support such as silica gel. The catalyst is gradually adsorbed on to the support.

None of these references suggest the production of polybutenes using liquid butenes and a fixed bed of a granular aluminum chloride catalyst.

Thus the invention provides a continuous process for producing polybutenes comprising introducing a liquid feedstream containing at least isobutene into a tubular reactor containing therein at least one fixed bed comprising granular, unsupported Lewis acid catalyst having a particle size of at least 0.8 mm, at a reaction pressure and temperature suitable for polymerizing the isobutene into a product polybutene having a number-average molecular weight of greater than 250, and recovering the polybutene.

One embodiment of the invention uses a fixed bed, granular, unsupported aluminum chloride catalyst. The catalyst is surprisingly more effective than the supported aluminum chloride catalysts of the prior art.

The process of the invention may also mimimize or avoid the use of the subsequent conventional treatment steps in which the product stream is quenched to stop the reaction, neutralised, washed, settled and dried to remove the contained catalytic material. This process may be operated in the substantial absence of any neutralization, washing, settling and drying steps.

The feedstock may be of any of the C4 olefins, pure or mixed, or may be diluted with an insert solvent such as butane or isobutane provided that the feedstream contains isobutene. The preferred feedstocks are mixtures of 1-butene, 2-butene and isobutene. The resultant polymeric material may be characterized as having a number-average molecular weight (Mn) of greater than 250, preferably from 400 and 3,000 and more preferably from 900 to 2500. The molecular weight distribution of the product (the ratio of the weight-average to number-average molecular weight, Mw/Mn) is desirably from 1.6 to 3.0, preferably 1.8 to 3.0.

The process entails passing the butene feedstream through a fixed bed comprising aluminum chloride of a specific particle size, e.g., from .8 mm to 40 mm. The feedstream is preferably introduced to the catalyst bed at a temperature of from -10°C to 60°C.

There are three major variations to the invention. First, the process may be used, preferably at less severe conditions of temperature and space velocity upon feedstreams containing isobutylene as the major reactant. Second, the process may be used, preferably at more severe conditions, upon feedstreams containing normal butenes as the main reactants, i.e., less than 5% isobutene, to produce a poly-n-butene. Finally, the latter variation may be practised on a mixed stream of n-butenes and isobutenes to produce a mixed polyisobutylene/n-butene polymer. The polymer may be separated (e.g., by distillation) and the resultant n-butene stream sent as a liquid stream to a second stage of catalyst to produce a poly-n-butene product. In this combination process, the first process step may be a conventional polymerization step.

The pressure is preferably held at a level sufficient to maintain the feedstock in the liquid phase.

Co-catalysts (or promoters) such as anhydrous hydrogen chloride may also be added to the butene feedstream or the reaction vessel to enhance the reaction rate. Non-aromatic diluents may be employed in the liquid feedstream.

The product polybutenes, preferably polyisobutylene, may be used as the oil soluble hydrocarbon component of a lubricating oil dispersant based upon the reaction of polybutenyl succinic anhydride with compounds such as ethylene polyamines and polyols.

The tubular reactor is typically provided with an inlet and outlet, and may be constructed of a suitable metal (e.g., Monel, and Hastelloy metal alloys which are resistant to corrosion in contact with chlorine-containing substances) to contain the reactants at the selected temperature and pressure conditions. The reactor can be cooled by immersing the reactor in a suitable coolant liquid (e.g., water or water/ethylene glycol mixtures) which is in turn cooled by conventional means. Also, if desired, a heat exchange device can be located within the tubular reactor to maintain the selected polymerization reaction temperature. The reactor can be segmented for ease of dismantling for loading of fresh catalyst and unloading of used or spent catalyst.

The tubular reactor can be provided with conventional catalyst screens or inert packing to maintain the catalyst bed within its fixed bed zone (or zones) within the reactor.

The reactor configuration may be one or more columns or tubes or other suitable form, and the fixed bed can comprise one or a series of beds. The multiple beds may be shallow (and adiabatic) and allow for cooling of each bed's effluent liquid by external heat exchange between the various beds. The fixed bed may be operated in up-flow, downflow, or horizontal flow as desired.

When a plurality of tubes are employed, they can be arranged in parallel in the form of a tube bundle suitably baffled for concurrent flow through each tube inlet and for concurrent withdrawal of product stream from each tube outlet, thereby permitting scale-up of the process to the desired mass throughput. The diameter of each tube is generally in the range of from 0.25 to 5 cm, and more usually from 0.6 to 2.5 cm. Use of diameters smaller than 0.25 cm is possible, although with the attendant increased costs of construction of a commercially sized reactor. Use of tube diameters greater than 5 cm presents difficulties in heat removal from the tubes and the control of the reaction temperature.

The precise manner of construction of tubular reactors will be apparent to one of ordinary skill in the art and need not be further discussed here.

The feedstock to this process may be a pure or mixed butene stream containing one or more of 1-butene, 2-butene (cis and trans), besides isobutene. It may be diluted by a miscible non-aromatic solvent (e.g., saturated aliphatic solvents) for the monomers, such as butane, isobutane or mixtures thereof. The preferred feedstocks (preferred on an availability and economic basis) are available from catalytic crackers and stream crackers. These processes are known in the art. The butene streams typically contain between 5 wt. % and 50 wt. % isobutylene together with 1-butene, cis- and trans-butene-2, isobutane and less than 1 wt. % butadiene. One desirable $C_4$ feedstream is derived from refinery catalytic or steam cracking processes and contains 6-45 wt. % isobutylene, 25-35 wt. % saturated butanes AND 15-50 wt. % 1- and 2-butenes. The monomer feedstream is preferably substantially anhydrous, that is, it contains less than 50 ppm, and more preferably less than 30 ppm, and most preferably less than 10 ppm, by weight of water. Such low levels of water can be obtained by contacting the feedstream, prior to the reactor, with a water absorbent (such as $CaCl_2$, $CaSO_4$, molecular sieves and the like) or by the use of distillation drying. Suitable molecular sieves include 4 to 8 US mesh 3 Angstrom molecular sieves.

The monomer feedstream should preferably also be substantially free of any other impurity which is adversely reactive with the catalyst under the polymerization conditions. For example, the monomer feed to an aluminum chloride bed should be preferably substantially free of bases (such as caustic), sulfur-containing compounds (such as $H_2S$, COS, and organo-mercaptans, e.g., methyl mercaptan, ethyl mercaptan), N-containing compounds, and the like. Most preferably, the monomer feed contains less than about 10 ppm by weight of sulfur-containing compounds, calculated as elemental sulfur, less than about 10 ppm by weight of N-containing compounds (calculated as elemental N), and less than about 10 ppm by weight of caustic, calculated as NaOH. Such low levels of base, sulfur and nitrogen impurities can be obtained by conventional techniques, as by the use of caustic to remove sulfur- and nitrogen- compounds from a refinery $C_4$ stream, followed by water washing to remove caustic, drying with any of the above water absorbents, hydrogenating to remove $C_3$ - $C_5$ diolefins (e.g., butadienes) (to a level of below 1 wt. %, preferably <1,000 ppm by weight) and cooling the resulting purified $C_4$ stream for feed to the tubular reactors of the present invention, after admixing the selected cocatalyst therewith.

The monomer feedstream should preferably also be substantially free of aromatic compounds, such as benzene, toluene, xylene, naphthalene and other aromatic solvents (e.g., <10 ppm aromatic compounds) to avoid the resultant reactive degradation of the aluminum chloride catalyst. Therefore, use of an aromatic solvent is not envisioned in this process.

The feedstream is preferably maintained at a sufficient pressure (generally from 100 to 2000 kPa, preferably from 200 to 700 kPa) to be in liquid form both in the tubular reactor inlet and in the reaction mixture itself within the tubular reactor at the selected reaction temperature. The reactor inlet temperature is preferably within the range of from -10°C to +60°C, and the temperature within the reactor will be preferably controlled such that the reaction mixture within the reactor also falls substantially within that range. Conventional cooling means may be used to maintain the reaction at these temperatures in view of the exothermic nature of the reaction. Preferred reaction temperatures are from 0°C to +20°C, with higher temperatures tending to produce relatively lower molecular weight polymers.

The selected pressure in the reactor can be maintained by applying an appropriate pressure on the feed in combination with a back pressure regulator on the outlet side of the reactor.

The exotherm is more pronounced in the tubular reactor near the inlet to the catalyst bed (e.g., within the first 4 to 30 pipe diameters in the catalyst bed). Over this distance, the reaction mass generally experiences a temperature rise (relative to the reactor inlet temperature) of from 5 to 50°C, and more usually from 15 to 40°C. Thereafter, the temperature of the reaction mass is preferably decreased to the selected reactor outlet temperature, which is generally from 2°C below, to 2°C above, the reactor feed temperature. Most preferably, the outlet temperature from the reactor is substantially equal to the inlet or feed temperature to the reactor, since this implies substantially complete conversion of the monomer to product.

The butene feedstream is introduced into the reactor containing a fixed bed of a granular, unsupported Lewis acid catalyst. Although the catalyst may be any of the halides of aluminum, tin, zinc, antimony, titanium, or mixtures of any of these, the preferred material is aluminum trichloride. If desired, the catalyst can be admixed (viz, diluted) with inert (and preferably non-porous) materials (such as glass beads, glass helices, silicon dioxide e.g. washed sand , Teflon beads and the like).

The preferred granular aluminum trichloride catalyst is commercially manufactured by conventional processes, as by the high temperature reaction of aluminum metal and chlorine gas. Preferably, the catalyst is substantially anhydrous, and has a surface area of from 1 to 500 square centimeters per gram, more preferably from 5 to 400 square centimeters per gram, still more preferably from 10 to 200 square centimeters per gram, and most preferably from 20 to 60 square centimeters per gram.

The catalyst is employed in its bulk, granular form, and is not "supported", that is, the catalyst is not deposited as a thin layer on the surface of an inert catalyst support.

The catalyst itself may be any of the solid materials discussed above but preferably comprises aluminum trichloride. The catalyst may be of any suitable shape but is desirably spherical in shape to minimize the pressure drop across the reactor bed. The mean effective size of the catalyst particles should be at least 0.8 mm, with the maximum size dependent on such factors as the size (viz, the diameter) of the reactor tube, the length of the tube, the degree of conversion to product desired, and other factors. Generally, however, the catalyst particles used in this invention will be from 0.8 mm to 30 mm, preferably from 0.8 mm to 20 mm, more preferably from 0.8 mm to 10 mm, and most preferably from 0.8 mm to 4 mm. The size is more desirably from 8 to 20 mesh (that is, from 841 microns to 2.38 mm).

As was noted above, this process may employ a feedstream containing either mainly isobutene as the reactant or mainly n-butenes as the reactants. In the former case, at the preferred temperature from -10°C to 20°C, isobutylene will be the major reactant (with the inclusion of some n-butene) even in view of the mixed butenes in the feed. If the stream comprises vainly mixed n-butenes (that is, with feeds containing < 5 wt% isobutylene), then a higher temperature (generally 10 - 60°C, e.g., 20 - 50°C) is desirable as is a higher concentration of co-catalyst.

Generally, the feedstream will be passed through the tubular reactor's catalyst bed at a liquid hourly space velocity, based on the total catalyst bed volume (that is, the volume of the catalyst bed zone(s) within the tubular reactor), of from 1 to 100 $hr^{-1}$, and preferably from 10 to 80 $hr^{-1}$.

It is contemplated that this process may be used to polymerize isobutenes from pure or mixed streams (containing other butenes); to polymerize n-butenes from streams containing small amounts of isobutenes (e.g., less than about 5 wt. %); or sequentially to polymerize isobutene from a mixed stream, to separate the polyisobutylene from the stream, to polymerize the n-butenes, and, if desired, separate the product polymer. Cocatalyst could be added between the isobutylene polymerization step and the n-butene polymerization step.

Other design parameters such as recycle rate and % diluents are matters of choice in this instance and may be readily determined by one having ordinary skill in chemical engineering.

A material acting as a co-catalyst (or promoter), like water, HCl, alcohol or mixtures thereof may also be added to the butene feedstock before that feed is introduced to the tubular reactor or it may be added separately to the tubular reactor, e.g., to the catalyst bed. Preferably gaseous, anhydrous HCl, is employed as the co-catalyst. The HCl will be employed in a catalytically effective amount, which amount will generally range from 50 to 5000 ppm by wt. of the monomer feed, preferably 50 to 500 ppm (e.g., 70 to 200 ppm) by weight of the monomer feed when the monomer feed comprises >5 wt. % isobutylene, and preferably from 100-5000 ppm (e.g., 400-3000 ppm) by weight when the feed comprises n-butenes and <5 wt. % isobutylene. If anhydrous HCl is added to the feedstream containing isobutene, t-butyl chloride is formed before contact with the solid catalyst. This has been found to promote the polymerization of the isobutene. Water, in a catalytic amount, may be added to the feedstock but is not preferred since it has a tendency to cause physical deterioration of the catalyst with time. Alcohols, such as the preferred lower alkanols (e.g., methanol), may also be added. As has been pointed out above, the monomer feed is preferably anhydrous, and the reaction mixture is also preferably substantially anhydrous (that is, contains <50 ppm, more preferably <30 ppm, and most preferably <10 ppm, by weight water based on the monomer feed).

The pressure drop across the tubular reactor will vary depending on the catalyst volume, catalyst particle size, flow rates, the tubular reactor's internal dimensions, and other factors, but will generally be less than about 500 kPa, e.g., from 50 to 400 kPa, for inlet pressures of from 200 to 2000 kPa, respectively.

The reaction mixture is normally maintained substantially in the liquid phase within the tubular reactor, that is, the formation of a separate gaseous space in the reactor is preferably avoided or substantially minimized, although mixed vapor-liquid flow (resulting from the formation of minor amounts of bubbles in the reactor due to the reaction exotherm) can be employed.

The conversion, based on isobutene in the feedstock, may be as high as 99% if the teachings of the specification are followed.

The polymeric product, polybutene, produced by this process has a $M_n$ greater than about 250, preferably from 400 to 3,000, and most preferably from 900 to 2,500. The molecular weight distributions ($M_w/M_n$) are desirably about 2.0 (e.g., 1.9-2.3), although ratios can range from 1.6 to 3.0. The large difference in molecular weight between the feedstocks and the product polymer allows the use of simple distillation techniques to separate the product.

The liquid product effluent from the tubular reactor normally comprises polymer, unreacted liquid feed materials (unreacted olefin, if any, and unreactables, such as saturates (viz, n- and iso-butane) and diluent, and is substantially free of catalyst particles, as may be visually observed on inspection of the effluent which is a clear polymer solution devoid of suspended catalyst particulates. The effluent preferably contains less than about 150 ppm, more preferably less than about 100 ppm, and most preferably less than about 50 ppm, by weight of the catalyst (e.g., $AlCl_3$) therein.

The liquid product mixture may be withdrawn from the tubular reactor and subsequently treated (e.g., by depressuring into a suitable gas/liquid separation drum or other vessel) for separation of gaseous components therefrom (e.g., unreacted isobutene, butene, butane, and isobutane). If desired, these separated gases can be compressed, cooled and recycled to the feed inlet to the tubular reactor, although the need for such recycling is minimized or avoided by the use of the process of this invention in view of the high olefin conversions which are obtainable. A portion of the liquid reactor effluent can be recycled to the feed to dilute the content of the monomers in the feed to the reactor, if necessary. Preferably, the monomers fed to the tubular reactor are substantially free of monomers recycled from the tubular reactor effluent. Therefore, the monomer feedstream is preferably contacted with the catalyst in the process of this investigation on a once-through basis.

A further embodiment of the invention is a process comprising the steps of:

(a) introducing a first liquid feedstream containing isobutene and n-butenes into a first tubular reactor containing therein at least one fixed bed comprising a first Lewis acid catalyst at a reaction temperature and pressure suitable for polymerising the isobutene into a polybutene product having a number average molecular weight of greater than 250,

(b) separating the polybutene product to form a stream containing n-butene and not more than 5 wt.% isobutene,

(c) introducing the separated stream as a second liquid feedstream into a second tubular reactor, said reactor being as specified in claim 1, at a reaction temperature and pressure suitable for polymerising the n-butenes into a said product polybutene.

The reaction temperature in step (a) is preferably from -10 to 20°C and in step (c) is preferably from 10 to 60°C. A co-catalyst selected from HCl, water, alcohols or mixtures thereof is preferably introduced into each said tubular reactor. The co-catalyst desirably comprises anhydrous HCl in an amount of from 50 to 5000 ppm of each said liquid feedstream.

The polybutene polymers prepared by following the inventive process of this invention offer a number of advantages over those prepared by many other techniques with respect to the properties which are important in making lubricating dispersants, e.g., of the type formed by the reaction of polybutenyl succinic anhydride with polyamines or polyols.

One significant aspect of the process is that it permits reasonably precise control of product molecular weight and isobutene conversion. In lubricating oil dispersant technology it is known that the use of a higher molecular weight polybutene results in a dispersant additive exhibiting better engine performance in terms of sludge dispersancy and varnish deposit inhibition. However, some techniques for manufacturing polybutene have been somewhat unsatisfactory, since the viscosities of higher molecular weight materials increased proportionally to the molecular weight, thereby causing a number of problems in both handling and manufacture of the resulting dispersant products. The present process offers the advantage that, for a given molecular weight range, a material is formed at a relatively higher isobutene conversion than in conventional aluminum chloride catalyzed slurry polymerizations, and allows better control of polymer molecular weight than with such conventional slurry processes.

In the process of the present invention, the polymerization reaction is controllable and the target specification of molecular weight may be met via monitoring and adjustment of incoming co-catalyst addition rate, reactor temperature, feedstream temperature, residence time, feedstream introduction rate and the like. These parameters and the quality of the finished product can be monitored at close time intervals in the practice of the present invention. Thus, for a given polybutene molecular weight desired, process conditions can be defined which will direct the process toward the target product.

Another advantage of the invention is that a significant reduction in the quantity of so called "light ends" in the polymer product can be realized by careful selection of reaction parameters within the disclosure herein. These are polybutenes in the undesirable $\overline{M}_n$ range of less than about 250. The process of this invention may minimize the quantity of these materials and the yield of desired product in the high molecular weight range increases accordingly. The tubular reactor effluent containing the products of this invention should contain the low molecular weight polybutenes in an amount of less than about 10 % by weight, based on the total polymer that is produced prior to product finishing.

Polybutenes prepared in accordance with this invention are particularly useful as a feedstock for the production of improved lubricating oil dispersants. These dispersants generally comprise the reaction product of polybutenyl succinic anhydride, or the acid form thereof, with monoamines or polyamines having up to about 30 carbon atoms, having at least one primary or secondary amino group such as the alkylene polyamines, particularly the ethylene polyamines, the polyoxyalkylene amines, aromatic and cycloaliphatic amines, hydroxyamines, mono-aliphatic and di-aliphatic substituted amines. Useful dispersants are also formed by reacting monohyric and polyhydric alcohols with the polyisobutenyl succinic anhydride or diacid provided in accordance with this invention and preferred materials are thus derived from polyols having 2 to 6 OH groups containing up to about 20 carbon atoms such as the alkylene polyols and alkylene glycols. Also suitable are the polyoxyalkylene alcohols such as polyoxyethylene alcohols and polyoxypropylene alcohols, monohydric and polyhydric phenols and naphthols, ether alcohols and amino alcohols and the like. Borated derivatives of the foregoing dispersants are also useful, especially borated nitrogen containing dispersants resulting from boration with boron oxide, boron halide, boron acids and esters to provide 0.2 to 2.0 weight percent boron in the dispersant. Metals and metal-containing compounds can also form useful dispersants and these are compounds capable of forming salts with the polybutenyl succinc anhydride or acid (using the polybutenes of the present invention). These include metals such as the alkali metals, alkaline earth metals, zinc, cadmium, lead, cobalt, nickel, copper, molybdenum, in the form of oxides, carboxylates, halides, phosphates, sulfates, carbonates, hydroxides and the like.

Lubricating oil compositions will usually contain dispersants in amounts of from 1 to 15 weight percent based on the overall weight of the composition. Lubricating oil compositions will typically contain other additives in customary amounts to provide their normal attendant functions such as metal detergents or basic metal detergents, anti-wear additives, anti-oxidants, viscosity modifiers and the like. Dispersants are conventionally packaged and dispensed in the form of solution concentrates containing up to 50 weight percent dispersant in a mineral oil.

The invention is further illustrated by the following examples (wherein parts are by weight unless otherwise indicated) which are not to be considered as limiting its scope. In the Examples, the $C_4$ feeds were dry (<30 wt ppm water) and were free of catalyst poisons (<5 wt ppm S and <5 wt ppm N).

EXAMPLE 1

The polymerization reactor was a continuous copper tubing with 0.25 inch (6.4 mm) inside diameter packed with 24 grams of granular $AlCl_3$ with particle size distribution of from about 841 microns to about 2.38 mm (-8 +20 mesh). A stainless steel screen was placed at the outlet of the reactor to keep the catalyst in place. The reactor was cooled by immersion in a bath of alcohol and water. The cooling bath was adjusted to maintain a temperature of 8.4°C. The temperature of the liquid mixed $C_4$ feed was maintained at 9.2°C. The flow rate of feed was maintained at about 80 ml/min.

Five thermocouples were installed along the tubular reactor to record the temperature profile of the reactor. Each thermocouple was separated from its neighbour by 10 inches (25.4 cm). The temperature readings of the five thermocouples, starting from the inlet of the tubular reactor, were 13.2°C, 10.6°C, 10.4°C, 10.9°C, and 10.6°C, respectively. The feedstock was 13.4% isobutene, 11.9% butene-1, 11.8% butene-2 and 62.8% isobutane. About 150 ppm by weight of water was added to the mixed $C_4$ feed as cocatalyst. The effluent from the reactor was monitored by an on-line gas chromatograph. The composition of the reactor effluent was as follows: isobutene 0.4%, butene-1 11.6%, butene-2 (which contains both cis and trans isomers) 13.8%, isobutane 74%. The resulting polymer was measured by GPC to have a number-average molecular weight of 1240.

The polymer was a clear viscous mass which was completely soluble in the reactor effluent diluent and emerged from the tube as a clean solution free of catalyst particle residue and in a free flowing condition.

EXAMPLE 2

A reactor similar to that in Example 1 was then constructed; it was, however, shorter, about 30 inches (76.2 cm) in total length. Three thermocouples were installed along the tube at 10 inch (25.4 cm) intervals. The liquid mixed $C_4$ feed composition was similar to Example 1 except 200 ppm of HCl by weight was added to the feed as cocatalyst instead of water. The temperature of cooling bath was maintained at 9.3°C. The feed temperature was 10.3°C. The feed flow rate was maintained at 128 ml/min. The temperature profile along the reactor was: 9°C, 9.5°C, 15.1°C. The composition of the reactor effluent was 0.2% isobutene, 9.2% butene-1, 10.2% butene-2, and 80.4% isobutane. The resulting polymer was determined to have $\overline{M}_n$ = 1074. The butene-1 content of the resulting polymer, after removal of the light ends by distillation, was measured as 20.5 weight percent. The viscosity of the resulting polymer, at 100°C, was 193 cSt.

EXAMPLE 3

The polymer obtained in Example 2 was chlorinated using chlorine gas at 121°C to obtain a chlorinated polybutene with a chlorine content of 3.96% by weight. The chlorinated polybutene was reacted with maleic anhydride at 1:1 mole ratio at 232°C for 4 hours. The saponification number of the resulting product was measured as 111.5 and percent active ingredient was 82.4%. The viscosity of the product, at 100°C, was 570 cSt.

EXAMPLE 4

A reactor similar to that of Example 1 (except of 20 inches in length and 0.375 inch (9.5 mm) inside diameter) was packed with 20 grams of granular $AlCl_3$ having a particle size distribution from -4 to +14 mesh (1.41 mm to 4.76 mm). The liquid mixed $C_4$ feed composition comprised 15% isobutene, 15% butene-1, and 55% isobutane. About 150 ppm of HCl by weight was added to the feed as cocatalyst in addition to about 50 ppm of water. The cooling bath was adjusted to maintain 19.3°C. The feed

7

temperature was maintained at 21.2°C. The flow rate of feed was maintained at 106 ml/min. The temperature recorded by the two thermocouples placed along the reactor were 20.9°C and 20.2°C. The $\overline{M}_n$ of the resulting polymer was measured by GPC as 849. The viscosity was 121 cSt at 100°C.

EXAMPLE 5

The polymer obtained in Example 4 was chlorinated using chlorine gas at 121°C to obtain a chlorinated polybutene having 3.84% chlorine by weight. This material was reacted with maleic anhydride at a 1:1 mole ratio at 232°C for 4 hours. The resulting product had a viscosity of 480 cSt, an active ingredient level of 81.3%, and a saponification number of 115.

EXAMPLE 6

The product sample of Example 5 was reacted with a polyamine in a S150N (solvent 150 neutral) oil at 149°C to prepare a dispersant. It contained 1.5% nitrogen.

EXAMPLE 7

The product of Example 3 was reacted with a polyamine in S150N oil at 149°C to prepare a dispersant. It contained 1.6% nitrogen.

EXAMPLE 8

A commercially available polyisobutylene succinic anhydride polyamine prepared from a 950 $\overline{M}_n$ PIB was measured for nitrogen content. (The PIB was itself made in a conventional stirred tank reactor with finely divided aluminum chloride powder as slurry catalyst (<100 mesh, <149 microns) and HCl as cocatalyst. The dispersant contained 1.58% nitrogen, had a saponification number of 112 and an active ingredient level of 80%.

Each of the dispersants of Example 6, 7, and 8 were subjected to two dispersancy bench tests, SIB (sludge inhibition test) and VIB (varnish inhibition test). The summary of the tests are shown in the Table I. For each of the tests, the smaller the number, the better the disperancy. The table also contains a blank. The blank has no dispersant and is for comparison purposes.

## Table I

| Ex. No. | $\overline{M}_n$ | % Butene-1 | SAP | % Oil | SIB | VIB |
|---------|------|------------|-----|-------|-----|-----|
| 6 | 849 | 12 | 115 | 81 | 8.9 | 9 |
| 7 | 1074 | 26 | 112 | 82 | 9.5 | 6.5 |
| 8 | 950 | 10 | 112 | 80 | 10.1 | 7 |
| Blank* | -- | -- | -- | -- | 21.5 | 11 |

*(comparative)

It is clear that the materials of the invention are better in both SIB and VIB tests than the commercial material.

EXAMPLE 9

A series of additional runs are made employing the reactor described in Example 1 in which the catalyst bed comprises the materials described in Table II below. The liquid feedstock comprises 15% isobutylene, 15% butene-1, 15% butene-2 and 55% isobutane. Water is added to the liquid feed as cocatalyst in the amounts indicated in Table III below. All runs employ substantially the same volume of catalyst.

These results show the improved results achieved by use of the fixed bed granular aluminum chloride catalysts in accordance with the process of this invention, as compared to finely divided aluminum chloride catalyst and to various supported catalyst materials.

8

## TABLE II

| Example No. | Catalyst |
|---|---|
| Comparative A | 35-40 wt% AlCl$_3$ intercalcated in graphite powder; 200 mesh (<74 microns). |
| Comparative B | 1 wt% AlCl$_3$ on cross-linked polystyrene (2% divinylbenzene) powder (Alfa Products, Morton Thiokol). |
| Comparative C | CoCl$_2$ on 4 Angstrom molecular sieve; 8x12 mesh (1.7 to 2.4 mm) Union Carbide Corp.. |
| Comparative D | CoCl$_2$ on silica gel; 8x12 mesh (1.7 to 2.4 mm) Union Carbide Corp. |
| Comparative E | CoCl$_2$ on activated alumina; 8x12 mesh (1.7 to 2.4 mm) Union Carbide Corp. |
| Comparative F | AlCl$_3$ solids; -20 +40 mesh (0.42 - 0.841 mm). |
| Comparative G | HCl/AlCl$_3$/xylene complex (1:2:3 mole:mole:mole) saturated on Amberlyst 15 sulfonated macroreticular polystyrene DVB cross-linked resin (Alfa Products, Morton Thiokol). |
| Example 9 | AlCl$_3$; -4+20 mesh (0.841 - 4.76 mm). |

9

EP 0 273 627 B1

TABLE III

| Example No. | Reactor Temp. (°C) | | Reactor Pressure | | Water (wppm) | Liquid Flow (ml/min) | i-C₄ = Conv. (%) |
| | Feed | Outlet | Feed | Outlet | | | |
|---|---|---|---|---|---|---|---|
| Comp. A | (1) | - | 600 | - | 150 | 0 | 0$^{(2)}$ |
| Comp. B | (1) | - | 600 | 200 | 100 | 50-100 | 0$^{(3)}$ |
| Comp. C | (1) | - | 600 | 200 | 100 | 50-100 | 0$^{(3)}$ |
| Comp. D | (1) | - | 600 | 200 | 150 | 50-100 | 0$^{(3)}$ |
| Comp. E | (1) | - | 600 | 200 | 150 | 50-100 | 0$^{(3)}$ |
| Comp. F | (1) | - | 600 | - | 150 | <10 | 0$^{(4)}$ |
| Comp. G | (1) | - | 600 | 200 | 150 | 50-100 | 0$^{(3)}$ |
| Ex. 9 | -15 | -10 | 600 | 200 | 150 | 50-100 | 100$^{(5)}$ |

NOTES:

(1) Reactor feed temperatures are varied over a range of from 0 to 50°C in an attempt to increase the rate of polymerization.

(2) No feed flow is observed. Trace of oily liquid is found upon disassembly of reactor, after washing of catalyst with isobutane.

(3) no monomer conversion is observed.

(4) Some oily polymer product is formed, but no noticeable GC monomer conversion is noted.

(5) < 2 wt% isobutylene in reactor effluent which is observed to be clear polymer solution, free of particulates.

EXAMPLES 10 - 13

An additional series of runs are made employing the reactor procedure of Example 9, except that gaseous anhydrous HCl is employed as co-catalyst instead of water. The results thereby obtained are summarized in Table IV below.

These data indicate the control of monomer conversion which can be achieved in the practice of the process of this invention by variations in the HCl/AlCl₃ ratio.

TABLE IV

| Example No. | Reactor Temp.(°C) | | Reactor Pressure | | HCl (wppm) | Liquid Flow (ml/min) | i-C₄= Conv. (%) |
| | Feed | Outlet | Feed | Outlet | | | |
|---|---|---|---|---|---|---|---|
| Ex.10* | 4 | 6 | 600 | 200 | 100 | 100 | 100$^{(1)}$ |
| Ex.11 | 15 | 12 | 600 | 200 | 200 | 120 | 33 |
| Ex.12 | 20 | 25 | 600 | 200 | 75 | 120 | 100$^{(1)}$ |
| Ex.13 | 22 | 23 | 600 | 200 | 100 | 110 | 100$^{(1)}$ |

NOTES:

* = Feed : 10% isobutylene, 15% butene-1, 15% butene-2 and 60% isobutane.

(1) < 2 wt% isobutylene in reactor effluent which is observed to be clear polymer solution, free of particulates.

Claims

1. A continuous process for producing polybutenes comprising introducing a liquid feedstream containing at least isobutene into a tubular reactor containing therein at least one fixed bed comprising granular, unsupported Lewis acid catalyst having a particle size of at least 0.8 mm, at a reaction pressure and temperature suitable for polymerizing the isobutene into a product polybutene having a number-average molecular weight of greater then 250, and recovering the polybutene.

2. The process of claim 1 wherein the Lewis acid comprises aluminum trichloride.

3. The process of claim 1 or claim 2 wherein the feedstream comprises a mixture of isobutene, 2-butene, and 1-butene.

4. The process of any of claims 1 to 3 wherein the feedstream additionally contains a non-aromatic diluent.

5. The process of any of claims 1 to 4 wherein the reaction temperature is from -10°C to 60°C.

6. The process of any of claims 1 to 5 wherein the granular catalyst has a size of from 0.8 mm to 40 mm, preferably from 0.8 mm to 30 mm, most preferably from 0.8 mm to 20 mm.

7. The process of any of claims 1 to 6 wherein the number-average molecular weight of the polymeric product is from 400 to 3000.

8. The process of any of claims 1 to 7 wherein the weight-average molecular weight/number-average molecular weight of the polymeric product is from 1.6 to 3.0, preferably 1.8 to 3.0.

9. The process of any of claims 1 to 8 wherein a cocatalyst of hydrogen chloride, water or alcohol is additionally introduced into the fixed catalyst bed.

10. The process of any of claims 1 to 9 wherein the cocatalyst comprises HCl in an amount of from 50 to 5000 ppm of said liquid feedstream.

11. The process of any of claims 1 to 10 wherein the liquid feedstream contains isobutene as the major reactant.

12. The process of claim 11 wherein the reaction temperature is from -10°C to 20°C.

13. The process of any of claims 1 to 10 wherein the liquid feedstream contains mainly normal butenes and not more than 5 wt. % isobutene.

14. The process of claim 13 wherein the reaction temperature is from 10°C to 60°C.

15. A process according to any of claims 1 to 10 comprising the steps of:
    (a) introducing a first liquid feedstream containing isobutene and n-butenes into a first tubular reactor containing therein at least one fixed bed comprising a first Lewis acid catalyst at a reaction temperature and pressure suitable for polymerising the isobutene into a polybutene product having a number-average molecular weight of greater than 250,
    (b) separating the polybutene product to form a stream containing n-butene and not more than 5 wt. % isobutene,
    (c) introducing the separated stream as a second liquid feedstream into a second tubular reactor, said reactor being as specified in claim 1, at a reaction temperature and pressure suitable for polymerising the n-butenes into a said product polybutene.

16. The process of claim 15 wherein the reaction temperature in step (a) is from -10 to 20°C and in step (c) is from 10 to 60 °C.

17. The process of either of claims 15 or 16 wherein a co-catalyst selected from HCl, water, alcohols or mixtures thereof is introduced into each said tubular reactor.

18. The process of claim 17 wherein the co-catalyst comprises anhydrous HCl in an amount of from 50 to 5000 ppm of each said liquid feedstream.

EP 0 273 627 B1

**Patentansprüche**

1. Kontinuierliches Verfahren zur Herstellung von Polybutenen, bei dem ein flüssiger Einsatzmaterialstrom, der mindestens Isobuten umfaßt, in einen Rohrreaktor, in dem mindestens ein Festbett enthalten ist, das körnigen, nicht mit einem Träger versehenen Lewissäurekatalysator umfaßt, bei einem Reaktionsdruck und einer Temperatur eingebracht wird, die zur Polymerisation des Isobutens in ein Produkt-Polybuten mit einem durchschnittlichen Molekulargewicht (Zahlenmittel) von mehr als 250 geeignet ist, und das Polybuten gewonnen wird.

2. Verfahren nach Anspruch 1, bei dem die Lewissäure Aluminiumtrichlorid umfaßt.

3. Verfahren nach Anspruch 1 oder Anspruch 2, bei dem der Einsatzmaterialstrom eine Mischung aus Isobuten, 2-Buten und 1-Buten umfaßt.

4. Verfahren nach einem der Ansprüche 1 bis 3, bei dem der Einsatzmaterialstrom zusätzlich ein nicht-aromatisches Verdünnungsmittel enthält.

5. Verfahren nach einem der Ansprüche 1 bis 4, bei dem die Reaktionstemperatur -10°C bis 60°C beträgt.

6. Verfahren nach einem der Ansprüche 1 bis 5, bei dem der körnige Katalysator eine Größe von 0,8 mm bis 40 mm, vorzugsweise 0,8 mm bis 30 mm und insbesondere von 0,8 mm bis 20 mm hat.

7. Verfahren nach einem der Ansprüche 1 bis 6, bei dem das durchschnittliche Molekulargewicht (Zahlenmittel) des Polymerprodukts 400 bis 3 000 beträgt.

8. Verfahren nach einem der Ansprüche 1 bis 7, bei dem das durchschnittliche Molekulargewicht (Gewichtsmittel)/durchschnittliches Molekulargewicht (Zahlenmittel) des Polymerprodukts 1,6 bis 3,0 und vorzugsweise 1,8 bis 3,0 beträgt.

9. Verfahren nach einem der Ansprüche 1 bis 8, bei dem ein Cocatalysator aus Chlorwasserstoff, Wasser oder Alkohol zusätzlich in das Katalysatorfestbett eingebracht wird.

10. Verfahren nach einem der Ansprüche 1 bis 9, bei dem der Cokatalysator HCl in einer Menge von 50 bis 5 000 ppm von dem flüssigen Einsatzmaterialstrom umfaßt.

11. Verfahren nach einem der Ansprüche 1 bis 10, bei dem der flüssige Einsatzmaterialstrom Isobuten als Hauptreaktant enthält.

12. Verfahren nach Anspruch 11, bei dem die Reaktionstemperatur -10°C bis 20°C beträgt.

13. Verfahren nach einem der Ansprüche 1 bis 10, bei dem der flüssige Einsatzmaterialstrom hauptsächlich n-Butene und nicht mehr als 5 Gew.% Isobuten enthält.

14. Verfahren nach Anspruch 13, bei dem die Reaktionstemperatur 10°C bis 60°C beträgt.

15. Verfahren nach einem der Ansprüche 1 bis 10, bei dem
(a) ein erster flüssiger Einsatzmaterialstrom, der Isobuten und n-Butene enthält, in einen ersten Rohrreaktor, in dem mindestens ein Festbett enthalten ist, das einen ersten Lewissäurekatalysator umfaßt, bei einer Reaktionstemperatur und einem Druck eingebracht wird, die geeignet sind, um das Isobuten in ein Produktpolybuten mit einem durchschnittlichen Molekulargewicht (Zahlenmittel) von mehr als 250 zu polymerisieren,
(b) das Polybutenprodukt getrennt wird, so daß ein Strom gebildet wird, der n-Buten und nicht mehr als 5 Gew.% Isobuten enthält,
(c) der getrennte Strom als ein zweiter flüssiger Einsatzmaterialstrom in einen zweiten Rohrreaktor, wobei der Reaktor wie in Anspruch 1 spezifiziert ist, bei einer Reaktionstemperatur und Druck eingebracht wird, die geeignet sind, um die n-Butene zu dem Produktpolybuten zu polymerisieren.

12

**16.** Verfahren nach Anspruch 15, bei dem die Reaktionstemperatur in Stufe (a) -10 bis 20 ° C beträgt und in Stufe (c) 10 bis 60 ° C beträgt.

**17.** Verfahren nach entweder Anspruch 15 oder 16, bei dem ein Cokatalysator ausgewählt aus HCl, Wasser, Alkoholen oder Mischungen daraus in jeden Rohrreaktor eingebracht wird.

**18.** Verfahren nach Anspruch 17, bei dem der Cokatalysator wasserfreies HCl in einer Menge von 50 bis 5 000 ppm von jedem flüssigen Einsatzmaterialstrom umfaßt.

**Revendications**

**1.** Procédé continu pour la production de polybutènes, comprenant l'introduction d'un courant liquide d'alimentation contenant au moins de l'isobutène dans un réacteur tubulaire renfermant au moint un lit fixe comprenant un catalyseur du type acide de Leuis granulaire non fixé sur un support, sous une pression et à une température de réaction convenables pour la polymérisation de l'isobutène en un produit consistant en un polybutène ayant une moyenne numérique du poids moléculaire supérieure à 250, et la séparation du polybutène.

**2.** Procédé suivant la revendication 1, dans lequel l'acide de Lewis consiste en trichlorure d'aluminium.

**3.** Procédé suivant la revendication 1 ou la revendication 2, dans lequel le courant d'alimentation comprend un mélange d'isobutène, de 2-butène et de 1-butène.

**4.** Procédé suivant l'une quelconque des revendications 1 à 3, dans lequel le courant d'alimentation contient en outre un diluant non aromatique.

**5.** Procédé suivant l'une quelconque des revendications 1 à 4, dans lequel la température de réaction est comprise dans l'intervalle de -10 ° C à 60 ° C.

**6.** Procédé suivant l'une quelconque des revendications 1 à 5, dans lequel le catalyseur granulaire possède un diamètre de 0,8 mm à 40 mm, avantageusement de 0,8 mm à 30 mm, de préférence de 0,8 mm à 20 mm.

**7.** Procédé suivant l'une quelconque des revendications 1 à 6, dans lequel la moyenne numérique du poids moléculaire du produit polymérique est comprise dans l'intervalle de 400 à 3000.

**8.** Procédé suivant l'une quelconque des revendications 1 à 7, dans lequel le rapport moyenne pondérale du poids moléculaire/moyenne numérique du poids moléculaire du produit polymérique va de 1,6 à 3,0, de préférence de 1,8 à 3,0.

**9.** Procédé suivant l'une quelconque des revendications 1 à 8, dans lequel un co-catalyseur constitué de chlorure d'hydrogène, d'eau ou d'un alcool est introduit en outre dans le lit fixe de catalyseur.

**10.** Procédé suivant l'une quelconque des revendications 1 à 9, dans lequel le co-catalyseur comprend du HCl en une quantité de 50 à 5000 ppm dudit courant liquide d'alimentation.

**11.** Procédé suivant l'une quelconque des revendications 1 à 10, dans lequel le courant liquide d'alimentation contient de l'isobutène comme corps réactionnel principal.

**12.** Procédé suivant la revendication 11, dans lequel la température de réaction est comprise dans l'intervalle de -10 ° C à 20 ° C.

**13.** Procédé suivant l'une quelconque des revendications 1 à 10, dans lequel le courant liquide d'alimentation contient principalement des n-butènes et pas plus de 5 % en poids d'isobutène.

**14.** Procédé suivant la revendication 13, dans lequel la température de réaction est comprise dans l'intervalle de 10 ° C à 60 ° C.

**15.** Procédé suivant l'une quelconque des revendications 1 à 10, comprenant les étapes :

(a) d'introduction d'un premier courant liquide d'alimentation contenant de l'isobutène et des n-butènes dans un premier réacteur tubulaire renfermant au moins un lit fixe comprenant un premier catalyseur du type acide de Lewis à une température et sous une pression de réaction convenables pour la polymérisation de l'isobutène en un produit consistant en un polybutène ayant une moyenne numérique du poids moléculaire supérieure à 250,

(b) de séparation du produit consistant en un polybutène pour former un courant contenant du n-butène et pas plus de 5 % en poids d'isobutène,

(c) d'introduction du courant séparé sous forme d'un second courant liquide d'alimentation dans un second réacteur tubulaire, ledit réacteur répondant à la spécification suivant la revendication 1, à une température et sous une pression de réaction convenables pour la polymérisation des n-butènes en ledit produit consistant en un polybutène.

**16.** Procédé suivant la revendication 15, dans lequel la température de réaction dans l'étape (a) est comprise dans l'intervalle de -10 à 20°C et, dans l'étape (c), est comprise dans l'intervalle de 10 à 60°C.

**17.** Procédé suivant la revendication 5 ou 6, dans lequel un co-catalyseur choisi entre HCl, l'eau, des alcools ou leurs mélanges, est introduit dans chaque réacteur tubulaire.

**18.** Procédé suivant la revendication 17, dans lequel le co-catalyseur comprend du HCl anhydre en une quantité de 50 à 5000 ppm de chaque courant liquide d'alimentation.